# EUROPEAN PATENT APPLICATION

(11) **EP 4 678 998 A1**
(43) Date of publication of application: **14.01.2026**
(21) Application number: 24195413.0
(22) Date of filing: 20.08.2024
(51) Int. Cl.: F24S 25/70, F24S 30/425, H02S 20/32

(54) **SWING APPARATUS FOR MOBILE SUN TRACKING SYSTEMS**

(30) Priority: 12.07.2024 TR 202409077
(71) Applicant: Erl Teknik Enerji Anonim Sirketi, Cankaya Ankara (TR)
(72) Inventor: KAHRAMAN, GOKTUG, ANKARA (TR); DEMIR, ERDI, ANKARA (TR)
(74) Representative: Metida

(57) **Abstract**

The invention relates to a swing apparatus for mobile solar tracking systems. Such systems are developed to ensure that solar panels receive sunlight at an optimal angle. Solar tracking systems aim to increase energy efficiency by tracking the movement of the sun across the sky throughout the day. In this context, the invention provides a swing apparatus that provides rotational movement on an axis offset from the axis of the torque tube and eliminates alignment problems after assembly.

The invention provides an innovative approach to solving the alignment and post-assembly adjustment problems encountered in solar tracking systems. The swing apparatus utilizes steel parts, extending system lifetime and increasing resistance to wind loads. Furthermore, the swing bracket minimizes the effect of torsional shaking, increasing the efficiency of the solar panels and ensuring the reliability of the system. In this way, both the energy efficiency and operational reliability of solar tracking systems are increased.

## Description

### Technical Field

The invention relates to a swing apparatus for mobile solar tracking systems. Such systems are developed to ensure that solar panels receive sunlight at an optimal angle. Solar tracking systems aim to increase energy efficiency by tracking the movement of the sun across the sky throughout the day. In this context, the invention provides a swing apparatus that provides rotational movement on an axis offset from the axis of the torque tube and eliminates alignment problems after assembly.

The invention provides an innovative approach to solving the alignment and post-assembly adjustment problems encountered in solar tracking systems. The swing apparatus utilizes steel parts, extending system lifetime and increasing resistance to wind loads. Furthermore, the swing bracket minimizes the effect of torsional shaking, increasing the efficiency of the solar panels and ensuring the reliability of the system. In this way, both the energy efficiency and operational reliability of solar tracking systems are increased.

### Prior art

Solar tracking systems are mechanisms designed to ensure that solar panels receive sunlight in the most optimized manner. These systems track the movement of the sun in the sky throughout the day, continuously adjusting the angle of the panels to ensure maximum energy production. Solar tracking systems are capable of generating more energy than fixed-angle systems and have been developed to increase the efficiency of solar energy.

Solar tracking systems have been used to optimize energy production since the 1970s. Initially used in large-scale solar power plants and research facilities, these systems have found a wider range of applications over time and have become more efficient and accessible with technological advances. The first generation of solar tracking systems were mechanically simple but with low efficiency. Over the time, with the integration of motorized and electronic controls, the systems became more precise and efficient.

Some methods and technologies used in solar tracking systems;

### Single-axis Trackers:

Single-axis trackers allow solar panels to follow the daily movement of the sun by moving in the east-west direction. These systems produce more energy than fixed systems and are used especially in large-scale solar projects. The angle of the panels is continuously adjusted from sunrise to sunset to achieve maximum efficiency. These systems, which are simpler in terms of mechanical structure, also provide an advantage in terms of cost.

### Dual-Axis Trackers:

Dual-axis trackers allow solar panels to move on both horizontal and vertical axes, tracking the sun's diurnal and seasonal changes. These systems can increase energy production and are known as the systems that provide the highest energy production. Dual-axis systems provide a great advantage, especially in regions where the sun is at high angles throughout the year. These systems can make more complex and precise adjustments thanks to panels that are moved on two axes.

### Active Tracking Systems:

Active tracking systems continuously adjust the position of the panels using motors and electronic controls. These systems increase energy efficiency by precisely tracking the position of the sun. However, they require higher maintenance due to their mechanical complexity and cost. The angle of the panels is continuously optimized using electronic controls, sensors and actuators. Although these systems provide high precision and efficiency, they require regular maintenance and calibration.

### Passive Tracking Systems:

Passive tracking systems are simple mechanical systems the move the panels using the sun's heat. These systems attract attention with their low-cost and low-maintenance structures. However, their efficiency is lower than active systems. Passive systems are durable and long-lasting as they contain fewer moving parts. They provide mechanical movement by utilizing the sun's heat and natural environmental changes.

### Artificial Intelligence and Machine Learning Integration:

Artificial intelligence and machine learning are used to improve the efficiency of solar tracking systems. These technologies analyze historical and real-time data to determine the optimal position of panels and make automatic adjustments. This improves energy efficiency and reduces operational costs. Artificial intelligence uses weather forecasts and solar radiation data to determine the optimal panel angles. In addition, system performance can be continuously improved thanks to learning algorithms.

### IoT and Cloud Based Systems:

IoT sensors and cloud computing enable real-time data collection and analysis. These systems monitor environmental factors and ensure that the panels remain in optimal position. They also provide remote monitoring and maintenance capabilities, ensuring uninterrupted operation of the system. Cloud-based systems increase the performance of solar tracking systems with their large data analysis capacities. These systems maximize operational efficiency with real-time data analysis and remote management.

In U.S. Patent Application No. US8242424B2, the technology developed to increase the low efficiency of fixed solar panels and to optimize energy production is mentioned. In the invention, a single-axis system is used to solve this problem, allowing the panels to move in the east-west direction. The simple and robust mechanical structure provides low maintenance requirements.

U.S. Patent Application No. US8459249B2 describes a technology developed to enable solar panels to follow the sun at an optimal angle during the day. In the invention, a single-axis system was used to solve this problem, allowing the panels to move in the east-west direction. Precise tracking is provided with motorized actuators and electronic controls.

In U.S. Patent Application No. US11283395B2, the technology developed to increase the energy production of solar panels and to provide resistance to wind loads is mentioned. In the invention, the position of the panels is precisely adjusted and resistance to wind loads is ensured by using a multiple actuator system to solve this problem.

These patents aim to improve energy efficiency through various mechanical and electronic methods, addressing similar problems in solar tracking systems. The invention differs from these existing solutions by using steel parts instead of plastic bearings and a swing device to improve alignment and resistance to wind loads.

### The Aim of the Invention

The main purpose of the invention is to increase energy efficiency in solar tracking systems, solve installation and alignment problems, increase resistance to wind loads, and in general to ensure long life and reliability of the system. In order to achieve this goal, both mechanical reliability and operational efficiency have been increased by using swing apparatus and steel parts. The invention maximizes energy production by allowing the solar panels to receive sunlight at an optimal angle, eliminates alignment problems by allowing post-assembly adjustment, and reduces maintenance requirements caused by plastic bearings.

Another purpose of the invention is to adjust the height of the swing without disassembling it from the column.

A further purpose of the invention is to maximize energy production by ensuring that the solar panels receive sunlight at an optimal angle.

A further purpose of the invention is to enable the panels to move in the east-west direction during the day by using a single-axis system.

Still another purpose of the invention is to provide rotational movement on an axis offset to the axis of the torque tube by using a swing apparatus.

Another purpose of the invention is to eliminate alignment problems by providing the possibility of adjusting in various directions after assembly.

Yet another purpose of the invention is to minimize the effect of torsional galloping by using a swing apparatus.

Yet another purpose of the invention is to increase the durability of the system against wind loads.

Still another purpose of the invention is to extend the life of the system by using steel parts instead of plastic bearings.

A further purpose of the invention is to increase the reliability of the system by reducing operational problems.

Another purpose of the invention is to reduce operating costs by eliminating the maintenance requirements caused by plastic bearings.

Another purpose of the invention is to provide cost savings in long-term use by using durable materials.

Another purpose of the invention is to shorten the installation time with the swing apparatus that provides ease of assembly.

Another purpose of the invention is to reduce installation costs by minimizing alignment problems.

Another purpose of the invention is to increase the mechanical reliability of the system with the swing apparatus and steel structure.

Another purpose of the invention is to ensure system reliability by minimizing failures due to wind and environmental effects.

Another purpose of the invention is to reduce dependency on fossil fuels with more efficient solar tracking systems.

Yet another purpose of the invention is to contribute to environmental sustainability by increasing the use of renewable resources in energy production.

### Detailed Description of the Invention

The figures of the swing apparatus for the mobile solar tracking systems of the invention are presented below;
- **Figure** - **1**: General view of the moving solar tracking system
- **Figure - 2**: Cross-sectional view of the moving solar tracking system
- **Figure - 3**: Representation of gearbox offset
- **Figure - 4**: Perspective view of the swing apparatus
- **Figure - 5**: Exploded view of swing apparatus
- **Figure - 6**: View of the swing apparatus in middle position
- **Figure - 7**: View of the swing apparatus in reclined position
- **Figure - 8**: Tolerance display on the swing apparatus
- **Figure - 9**: Swing apparatus height adjustment display
- **Figure** - **10**: Demonstration of connector rotational movement

The elements in the figure above are numbered as follows and will be used in the remainder of the description:
1. Column
2. Panel
3. Driver
4. Torque Tube
5. Swing
   5.1 Swing body
   5.2 Swing plate
6. Male bearing connector
7. Bullseye bearing
8. Female bearing connector
9. Swing-Tube Connector
10. Pin
11. U-Bolt
12. Retaining ring

The invention is a swing apparatus used in mobile solar tracking systems comprising a box profile torque tube which is offset from the reducer to give oscillating motion to the torque tube, characterized by; a swing body(5.1) and a swing plate(5.2) comprising a pentagonal cavity through which said box profile torque tube(4) passes; at least one swing body (5.1) and at least one swing plate(5. 2) at least one thrust bullseye bearing(7) connected with a male bearing connector(6) passing into said female bearing connector(8), which is clamped between the two parts when they are fixed on each other; at least one bullseye bearing(7) connected with a grooved end to the grooved surface inside said female bearing connector(8) and whose grooved end passes into said male bearing connector(6); at least one retaining ring(12) on said male bearing connector(6), which prevents the vertical movement of said male bearing connector(6) in said female bearing connector(8) and thus allows said bullseye bearing(7) to move vertically by moving on said grooves when said male bearing connector(6) is rotated on its axis; at least one swing-tube connector(9), which is connected to said bullseye bearing(7) by a pin(10) and thus capable of oscillating movement in the axis of the pin; at least one U-bolt(11), which wraps said box profile torque tube(4) and allows said box profile torque tube(4) to be connected to the swing(5) apparatus and to make said oscillating movement by connecting with said swing-tube connector(9).

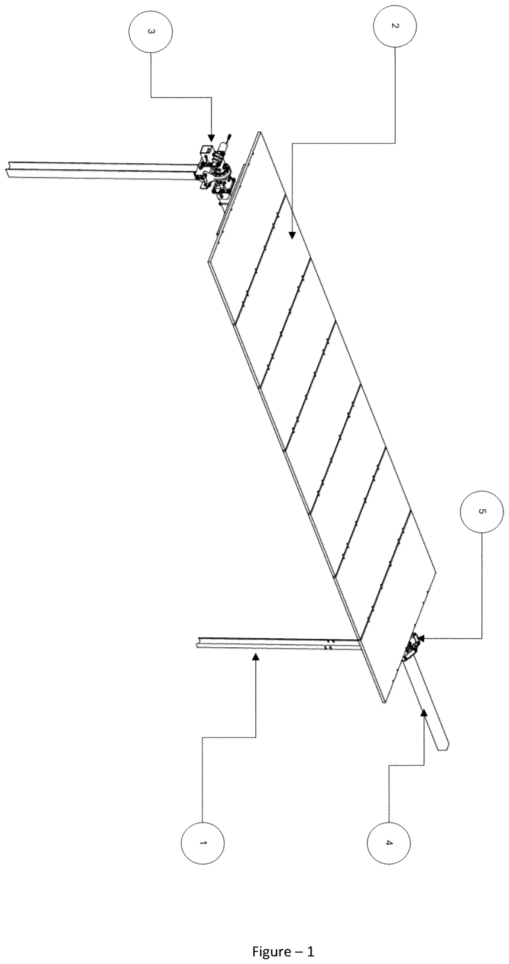

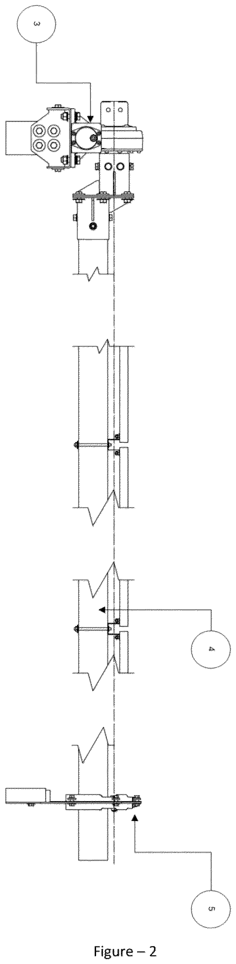

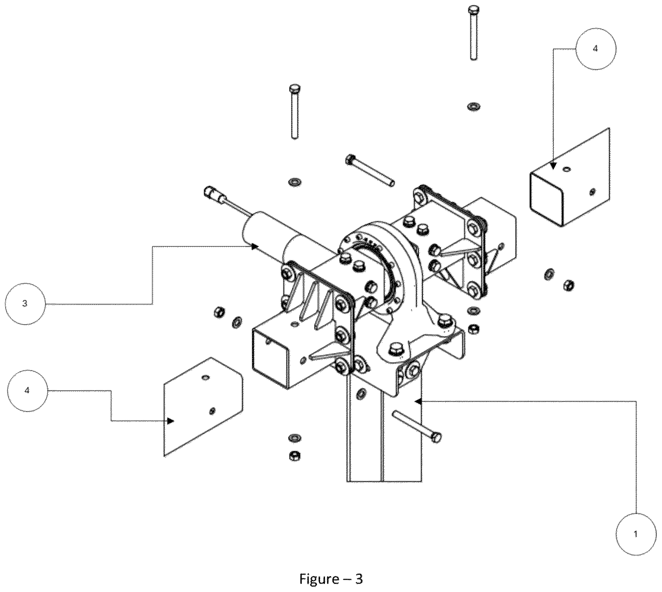

This patent application concerns a swing apparatus generally used in mobile solar tracking systems. Mobile solar energy systems are systems developed to utilize solar energy more efficiently. The angle of incidence of the sun's rays significantly affects the energy conversion efficiency of solar panels. If the sun's rays are in contact with the solar panels at right angles for the longest possible time, the efficiency of solar energy systems increases. For this reason, mobile solar energy systems are designed to follow the arc-shaped trajectory of the sun during the time between sunrise and sunset (Figures 1 - 2).

Mobile solar energy systems mainly consist of supporting columns(1), panels(2), drive(3) and torque tubes(4). The supporting columns(1) are the load-bearing components of the system, carrying the entire load and ensuring that the system is at the desired height. Torque tubes(4) connected to the supporting columns(1) are the moving components of the system and also carry the panels(2). The driver(3) mounted on at least one of the supporting columns(1) is the component that gives movement to the mechanism. When the drive(3) moves, the torque tube(4) connected to the drive(3) also moves (Figure 1 - 2).

The main purpose of the invention is to increase energy efficiency in solar tracking systems, to solve alignment problems, to provide resistance against wind loads and to ensure long life and reliability of the system in general. In order to achieve these aims, the basic structure mentioned above has been customized with the elements described in detail below.

In the invention, the columns(1) enable the system to be used at the desired height. Torque tubes(4) extending between the columns(1) constitute the beams of the structural system. At the same time, it allows the panels(2) connected to it to follow the sun's trajectory during the day by bringing them to the desired angle. This movement is done by offsetting from the axis of rotation of the driver(3)(Figure -3).

Offsetting means positioning the torque tube(4) at a certain distance from the main axis of rotation of the torque reducer(3). This means that instead of rotating directly around the main axis, the torque tube(4) is positioned at a certain distance from this axis. Offsetting causes the torque tube(4) to be located away from the axis during the rotational movement. This design changes the axial movement and rotational dynamics of the torque tube(4), allowing the torque tube(4) to oscillate. The torque tube(4), which will rotate around its axis without offsetting, thus draws an arc.(Figure - 3, Figure - 7)

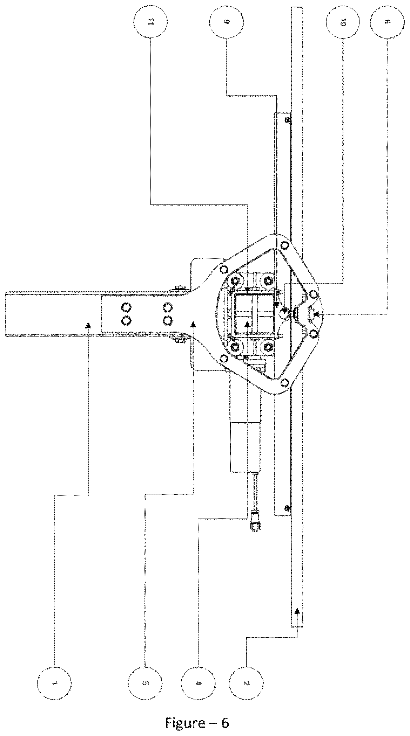

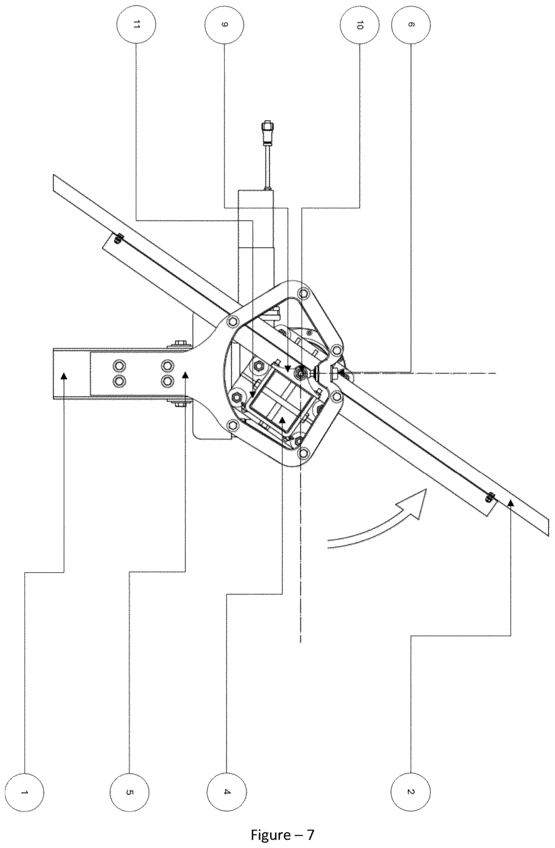

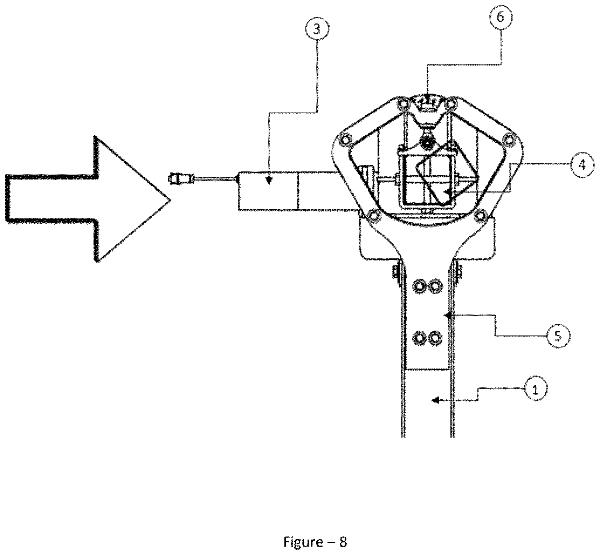

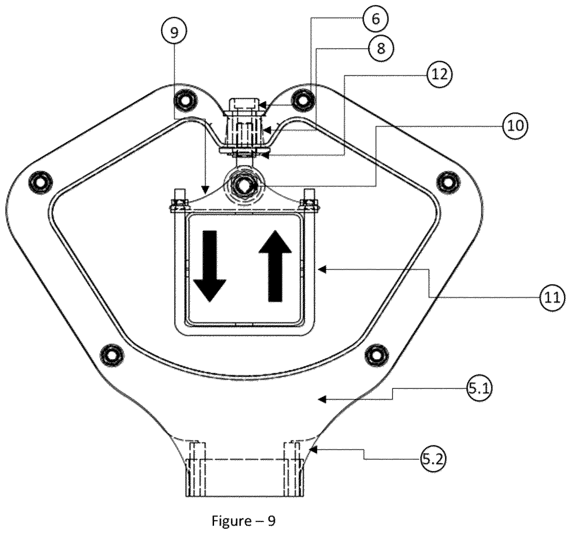

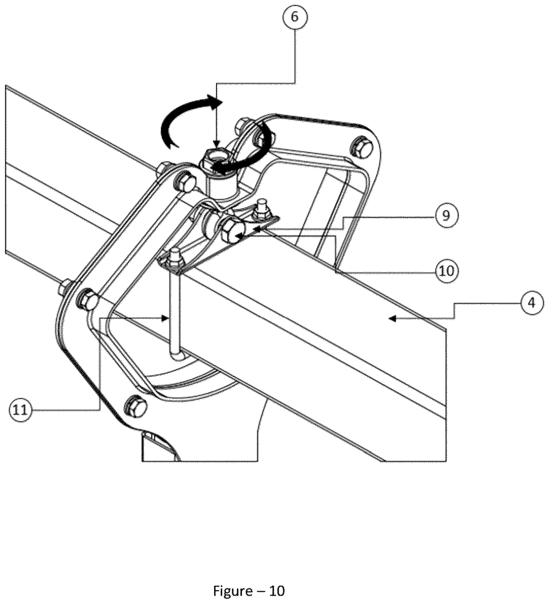

The torque tube(4), one of the key elements of the system, is designed as a box profile. Box-shaped torque tubes offer several advantages over cylindrical profile torque tubes in applications such as solar tracking systems. Firstly, they have significant advantages in terms of structural durability and strength. Box-shaped torque tubes provide a more balanced load distribution in all axes and offer higher resistance to bending moments. Especially the bending moment is critical for profile components. The loads carried by the system continuously exert forces on the profile, and the profiles extending between the columns must not bend nor deform against these forces. The fact that box profiles are more resistant to bending moments than other circular profiles makes the use of box profiles advantageous. It also increases the overall durability of the system by minimizing the effects of wind loads and other external forces. (Figure 6, Figure 7)

Precision and stability are also important advantages offered by torque tubes in the form of a box profile. These tubes are more resistant to bending, increasing the stability of torque tubes, especially over long distances. Ease of installation is also an important factor; thanks to their straight edges, box-shaped torque tubes allow for more accurate and robust mounting of mounting elements, which in turn allows for more precise alignment of control arms and U-bolt systems.

Connection and mounting advantages are also one of the reasons why torque tubes in the form of a box profile are preferred. Their flat surfaces allow fasteners to be mounted more securely, while the four surfaces allow various mounting elements to be connected in different directions. This increases design flexibility and ensures stronger connection points.

In terms of production and cost, torque tubes in form of box profiles are advantageous. They are widely used and standardized products in the industry, which reduces costs and simplifies the supply chain. In addition, box shaped torque tubes generally provide high strength using less material, which is advantageous in terms of both cost and weight.

In terms of aesthetic and functional design, torque tubes in the form of a box profile stand out. While their flat and smooth surfaces offer a more aesthetic appearance, they take up less space in the layout and usage area and provide a more functional design. For these reasons, box-shaped torque tubes can be a more logistically appropriate and effective choice than cylindrical profile torque tubes for swing apparatus and similar applications.

The torque tube(4) must be supported in the system as it is both a moving and carrier component. In addition, the torque tube(4) must be offset from the gearbox and the motion it receives must be transferred to the whole system without distortion. For this reason, a swing(5), which is one of the basic elements of the invention, was designed. The swing(5) is mounted on the columns(1) and connected to the torque tubes(4), both carrying the torque tubes(4) throughout the system and enabling the swinging movement of the torque tubes(4).

The swing mechanism(5) basically consists of the swing body(5.1), the swing plate (5.2), the bullseye bearing(7), the female bearing connector(8), the male bearing connector(6) and the U-bolt(11). The part of the swing(5) through which the torque tubes(4) pass is shaped like a pentagon with rounded edges. In the upper corner of the pentagon, a female bearing connector(8) is placed between the swing body(5.1) and the swing plate(5.2). When the swing body(5.1) and the swing plate(5.2) are overlapped and fixed to each other, the female bearing connector(8) is clamped between the two parts, allowing the locking of the bullseye bearing(7). The aforementioned female bearing connector(8) is fixed to the aforementioned female bearing connector(8) by means of the male bearing connector(6) so that the bullseye bearing(7) is inside the pentagonal region. The swing-tube connector(9) is connected to the bullseye bearing(7) by means of a pin(10). In this way, the swing-tube connector(9) is able to make a swinging movement in the axis in which it is connected to the bullseye bearing(7). The width of the swing-tube connector(9) must be the width of one side of the torque tubes(4) to be used in the system.

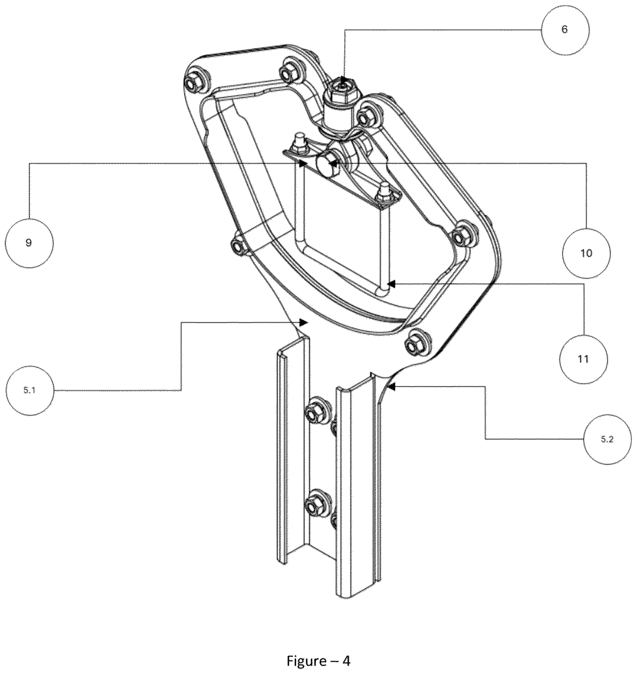

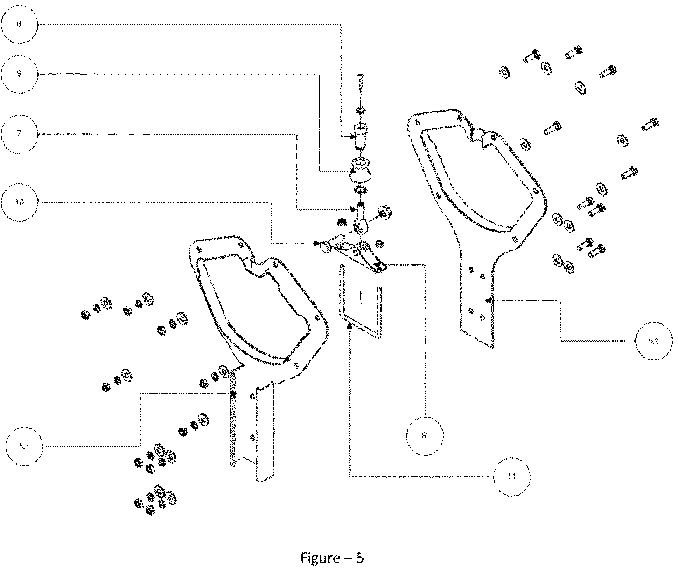

Torque tubes(4) used in the system are designed as box profile. In order to connect the torque tube(4) to the swing(5), there is a U-bolt(11) to wrap around three sides of the torque tube(4). The said U-bolt(11) is connected to the swing-tube connector(9) by wrapping around the torque tube(4), so that the torque tube(4) can pass through the swing(5) and make oscillating movement in the axis in which the bullseye bearing(7) is connected to the swing-tube connector(9). (Figure 4 and Figure 5)

Since the torque tube(4) used in the system is a box profile, a pentagonal form was preferred for the box profile to oscillate freely in the swing(5). In this way, the torque tube(4) leans against one edge of the pentagonal space at sunrise, continues to oscillate during the day, is positioned in the center at midday and leans against the other edge at sunset. The side lengths of the pentagonal structure are calculated based on the length of one side of the torque tube(4) and are at least the length of one side of the torque tube (4). This design allows the torque tube (4) to move freely and efficiently, allowing it to optimally follow the sun's trajectory throughout the day.

Given the fact that solar panels are installed on large and often uneven terrain, the adjustment of the columns in the same alignment and height creates both installation and adjustment difficulties. Another technical problem solved by the invention is that after the torque tube(4) is mounted on the swings(5); it is possible to perform both height adjustment and offsetting without disassembling the torque tube(4) from the swing(5) and/or the swing(5) from the column(1).

During the installation of the solar panels, the columns are aligned and the torque tubes are mounted on the swings placed on the columns. Due to the rigid structure of the torque tubes, it is not possible to mount the torque tubes when the columns are not in alignment. In this case, it is necessary to dismantle the misaligned column and reassemble the torque tube after it is aligned. In the invention, this problem is avoided by giving the possibility of offsetting. When the torque tube(4) is mounted on the swing(5) on the misaligned column(1), the torque tube(4) can be mounted on the swing(5) while the U-bolt(11) is in an angled position, thanks to the rotation of the U-bolt(11) on the axis of the bullseye bearing(7). Therefore, a certain tolerance is achieved and the need for a precise alignment adjustment between the columns is avoided. (Figure - 8)

When it is desired to assemble the profile to the swings on two columns that are not at the same height, the box profiles cannot be suspended. In this case, the box profile is first disassembled from the swings, then the swings are disassembled from the columns and the swings are reassembled to the columns. In the invention, this problem has been overcome by giving the possibility of height adjustment in the swing(5). A male bearing connector(6) is placed inside the female bearing connector (8), which is clamped between the swing body(5.1) and the swing plate(5.2). The bullseye bearing(7) is mounted with its grooved end inside the male bearing connector(6) so that it can move on the grooves in the male bearing connector(6) with the grooves on its end. The up and down movement of the male bearing connector(6) in the female bearing connector(8) is prevented by the retaining ring(12) and therefore fixed vertically. Therefore, when the male bearing connector(6) is rotated around its axis, the bullseye bearing(7), which fits into the grooves in it, can move up or down in the male bearing connector(6) according to the direction of rotation. In this way, the height of the U-Bolt(11) to which the torque tube(4) is mounted is achieved by simply turning the male bearing connector(6) without disassembling the swing(5) from the column(1). (Figure - 9, Figure - 10)

## Claims

1. A swing apparatus used in moving solar tracking systems containing a box profile torque tube(4), which is offset from the reductor and gives oscillating motion to the torque tube(4), **characterizing in that;**
- a swing body(5.1) and a swing plate(5.2) having a pentagonal cavity through which the said box profile torque tube(4) passes;
- a female bearing connector(8), which is compressed between the two parts when said swing body(5.1) and said swing plate(5.2) are fixed on each other;
- a male bearing connector(6) that fits into the said female bearing connector(8);
- at least one bullseye bearing (7) that is connected with its grooved end to the grooved surface inside said male bearing connector (6) and whose grooved end passes into said male bearing connector(6);
- at least one retaining ring(12) on said male bearing connector(6), preventing vertical movement of said male bearing connector(6) in said bullseye bearing connector(7), thus allowing said bullseye bearing(7) to move vertically by moving over said grooves when said male bearing connector(6) rotates on its axis;
- at least one swing-tube connector (9), which is connected to the aforementioned bullseye bearing(7) by a pin(10) and is thus able to oscillate in the axis of the pin(10);
- at least one U-bolt(11), which wraps the said box profile torque tube(4) and enables the said box profile torque tube(4) to be connected to the swing(5) apparatus by contacting with the said swing-tube connector(9) and to perform the said swinging movement.
